# EUROPÄISCHE PATENTSCHRIFT

(11) **EP 3 135 362 B1**
(45) Veröffentlichungstag und Bekanntmachung des Hinweises auf die Patenterteilung: **17.06.2020**
(21) Anmeldenummer: 16001636.6
(22) Anmeldetag: 26.07.2016
(51) Int. Cl.: B01D 46/00

(54) **VERSCHLUSSSYSTEM FÜR EINE FILTERKLAPPE BEI EINER INDUSTRIEABSAUGANLAGE**
LOCKING SYSTEM FOR A FILTER FLAP IN AN INDUSTRIAL EXTRACTION INSTALLATION
SYSTEME DE FERMETURE DE VOLET A ELEMENTS FILTRANTS SUR UNE INSTALLATION D'ASPIRATION INDUSTRIELLE

(30) Priorität: 19.08.2015 DE 202015005831 U
(43) Veröffentlichungstag der Anmeldung: 01.03.2017
(73) Patentinhaber: Nilfisk A/S, 2605 Brøndby (DK)
(72) Erfinder: Montalti, Maurizio, 40050 Valsamoggia, Castelletto di Serravalle (BO) (IT); Bondioli, Cesare, 41059 Zocca (MO) (IT)
(74) Vertreter: Riebling, Peter

(56) Entgegenhaltungen:
- WO-A1-2007/058288
- CH-A2- 708 183
- DE-A1- 2 717 403
- DE-A1-102013 020 382
- DE-T2- 69 611 163
- US-A1- 2014 053 722

## Beschreibung

Die Erfindung betrifft ein Verschlusssystem für eine Filterklappe bei einer Industrieabsauganlage nach dem Oberbegriff der Patentanspruchs 1.

Stoffe, wie sie beispielsweise häufig in der Pharmaindustrie vorkommen, erfordern eine spezielle Vorrichtung, um eine Verteilung des Sauggutes und somit einen Kontakt mit dem Bediener und der Umwelt zu vermeiden. Durch den Einsatz von speziellen Industrieabsauganlagen mit hocheffizienten Absauglösungen wird eine sichere, saubere und produktive Arbeitsumgebung erreicht.

Für diese spezielle Absauganforderung wird häufig eine High-Containment-Filtereinheit eingesetzt, welche insbesondere für das Absaugen von gefährlichen Verbindungen und Substanzen geeignet ist. Mit dem Filtersystem wird erreicht, dass der gefährliche, krebserregende Staub, wie er beispielsweise bei Asbest oder bei pharmazeutischen Stoffen vorkommt, gegenüber der Umwelt gefiltert wird. Oberstes Ziel dieser Technologie ist es, jeglichen Kontakt mit den aufgenommenen, hochgefährlichen Stoffen zu vermeiden und somit den Bediener und die Umwelt vor möglichen Risiken zu schützen.

Der Filterwechsel erfolgt bevorzugt mit dem Bag-in-Bag-out-Verfahren. Das Wartungspersonal kommt hierbei während des Filterwechsels nicht mit dem kontaminierten Partikelfilter in Kontakt. Der in einem Beutel (Bag) versiegelte Filter kann über eine Filterdeckel bzw. eine Zugangstüre aus dem Gehäuse des Containmentsystems entnommen und dann entsorgt werden.

Um die Wirkstoffe kontaminationsfrei ein- und ausbringen zu können, ist das System ferner mit einer RTP (Rapid Transfer Port)-Schleuse ausgestattet.

Aus dem Stand der Technik sind Filterdeckel bzw. Zugangstüren für Industrieabsauganlagen bekannt, welche die Öffnung des Filtergehäuses bzw. der Schleuse luftdicht verschließen. Hierzu wird der lose Filterdeckel über ein Verriegelungsmittel mit dem Gehäuse verbunden. Das Verriegelungsmittel besteht meistens aus einer Schraubverbindung, wobei auf der Deckelseite bevorzugt vier Rändelkopfschrauben und auf der Gehäuseseite, die dazu passenden Gewinde vorhanden sind.

Wesentlicher Nachteil bei solch einem Filterdeckel ist, dass dieser, nach dem Aufschrauben aller Rändelkopfschrauben, lose ist und mit beiden Händen gehalten werden muss. Der Deckel muss somit zuerst beiseite gelegt werden, um dann den Filter mit beiden Händen aus dem Filtergehäuse zu entnehmen.

Ein weiteres Problem ist, dass das Filtergehäuse generell einen umlaufenden Rand aufweist, welcher gegenüber der Gehäuseoberfläche absteht. Eine einseitige Schwenklagerung für die Filterklappe ist daher nicht möglich, da der Schwenkvorgang der Filterklappe durch den Rand behindert wird. Ebenso ist auch ein gerades Wegschwenken bzw. Anlegen der Filterklappe auf den Rand nicht möglich.

Die DE 27 17 403 A1 offenbart eine Filtereinheit für eine Industrieabsauganlage mit den Merkmalen des Oberbegriffs des Anspruchs 1.

Die DE 696 11 163 T2 offenbart ein modulares Luftreinigungssystem mit einer Zugangstür für den Zugang zu einer Filtereinheit. Die Zugangstür umfasst Gabelscharniere, bei denen ein Scharnierstift schwenkbar in einem Langloch der jeweiligen Gabelklemme geführt ist.

Der Erfindung liegt deshalb die Aufgabe zugrunde, eine Filterklappe für eine Industrieabsauganlage so weiterzubilden, so dass ein einfacher Wechsel des Filterelementes möglich ist.

Zur Lösung der gestellten Aufgabe ist eine Vorrichtung durch den Gegenstand des unabhängigen Anspruches 1 gekennzeichnet.

Die Filterklappe weist eine Kulissenführung auf, durch welche die Filterklappe einseitig schwenkbar an der Gehäuseoberfläche der Industrieabsauganlage angeordnet ist und ferner dadurch die Schwenkachse verschiebbar ausgebildet ist.

Ein erster wesentlicher Vorteil ist, dass der Benutzer beim Filterwechsel die Filterklappe nicht abbauen muss, sondern vielmehr als Arbeitsauflage für den Filter verwenden kann.

Durch die Anordnung der Filterklappe an der Gehäuseoberfläche mit einer Kulissenführung ist es nun möglich die Filterklappe von der Gehäuseoberfläche zu beabstanden und damit der notwendige Raum zu schaffen, welcher zum Abklappen der Filterklappe benötigt wird.

Die Gehäuseoberfläche weist hierfür bevorzugt zwei Führungselemente mit jeweils einer profilierten Ausnehmung auf. Die Filterklappe hat zwei randseitige Stifte, welche in die profilierten Ausnehmungen einsetzbar sind und dort drehend und verschiebbar angeordnet sind. Die profilierte Ausnehmung dient somit als Kulissenführung, welche ein Beabstanden und Klappen der Filterklappe gegenüber dem Gehäuse erlaubt.

Die Schwenkachse wird somit durch die beiden randseitigen Stifte der Filterklappe und die profilierte Ausnehmung des Führungselementes gebildet. Die Verschiebbarkeit der Schwenkachse erfolgt durch die relativ langen, profilierten Ausnehmungen der Führungselemente, welche die beiden randseitigen Stifte der Filterklappe führen und drehend lagern.

Das Abklappen der Filterklappe gegenüber der Gehäuseoberfläche erfolgt in einem Winkelbereich zwischen 45° und 135°, bevorzugt um 90°, so dass die Filterklappe als (Arbeits-)Tisch bzw. Ablage benutzbar ist. Die Kulissenführung dient somit sowohl als Scharnier, als auch als Klappbegrenzung für die Filterklappe.

Durch das Abklappen der Filterklappe in eine horizontale Position kann diese somit als Arbeitstisch bzw. Ablage für die Filtereinheit verwenden. Hierzu wird der Filter entweder alleine oder zusammen mit einer Unterlage (Tray) aus dem Filtergehäuse auf die heruntergeklappte Filterklappe gezogen. Dies stellt einen wesentlichen Vorteil gegenüber dem Stand der Technik dar, da der Filter ohne großen Aufwand und relativ einfach aus dem Gehäuse entnommen und anschließend von der Filterklappe gehoben werden kann.

Die Schwenkachse der Kulissenführung verläuft hierbei horizontal zur (vertikal verlaufen) Längsachse der Industrieabsauganlage. Es ist jedoch auch möglich die Kulissenführung, sowie die damit korrespondierenden Stifte an der Filterklappe an den vertikalen, seitlichen Flächen oder an der oberen, horizontalen Fläche im Bereich der Gehäuseöffnung anzuordnen. Der Schwenkvorgang der Filterklappe erfolgt dann entweder nach links/recht oder nach oben.

In einer weiteren bevorzugten Ausführungsform ist die Kulissenführung an einer der Flächen der Filterklappe und der Stift an der Gehäuseoberfläche der Industrieabsauganlage angeordnet.

Bisher war es nicht möglich, die Filterklappe abzuklappen, da das Gehäuse der Industrieabsauganlage im Bereich der Gehäuseöffnung einen umlaufenden, kragenartigen Rand aufweist, so dass mit einem gewöhnlichen Klappscharnier ein Klappvorgang, sowie auch ein sicheres und genaues Aufsetzen der Filterklappe auf die Gehäuseöffnung nicht funktioniert hat.

Durch die besondere Ausbildung der Kulissenführung ist es nun möglich, die Filterklappe in einem ersten Abschnitt von dem Filtergehäuse zu beabstanden und anschließend in einem zweiten Abschnitt den Kipp- bzw. Klappvorgang durchzuführen. Entscheidend ist, dass bei allen Ausführungsformen die Filterklappe gerade bzw. parallel von der Gehäuseöffnung entfernt werden kann und anschließend gegenüber der Gehäuseoberfläche in einem Winkel von vorzugsweise 90° klappbar ist.

In einer weiteren bevorzugten Ausführungsform ist unterhalb der Kulissenführung im Bereich der Gehäuseöffnung ein bügelartiger Tragrahmen angeordnet, welcher als Auflage für die abklappbar ausgestaltete Filterklappe dient. Der Bügel kann hierbei entweder fest mit dem Gehäuse oder auch lösbar verbunden sein. Ferner ist es möglich den Bügel zu klappen und in einer gewünschten Position bzw. Winkel zu arretieren.

Darüber hinaus besteht die Möglichkeit, mindestens eine Feder zwischen der Filterklappe und dem Gehäuse anzuordnen, welche eine Kraft auf die Filterklappe während des Öffnungs- bzw. Schließvorgang ausübt.

Ferner ist es auch möglich, die Kulissenführung vertikal zu schwenken, so dass der Stift außer Eingriff bringbar ist. Im Anschluss daran liegt die Filterklappe lose vor und kann von der Industrieabsauganlage entfernt werden.

Der Erfindungsgegenstand der vorliegenden Erfindung ergibt sich nicht nur aus dem Gegenstand der einzelnen Ansprüche, sondern auch aus der Kombination der einzelnen Ansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Soweit einzelne Gegenstände als "erfindungswesentlich" oder "wichtig" bezeichnet sind, bedeutet dies nicht, dass diese Gegenstände notwendigerweise den Gegenstand eines unabhängigen Anspruches bilden müssen. Dies wird allein durch die jeweils geltende Fassung des unabhängigen Anspruches bestimmt.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

### Es zeigen:

- Figur 1:: schematisierte Darstellung einer Industrieabsauganlage mit Filtereinheit
- Figur 2:: detaillierte Darstellung der Kulissenführung (Perspektive)
- Figur 3:: Seitenansicht der Industrieabsauganlage nach Figur 1
- Figur 4:: detaillierte Darstellung der Kulissenführung (Seitenansicht)
- Figur 5:: Seitenansicht der Industrieabsauganlage mit teilweise geöffneter Filterklappe
- Figur 6:: detaillierte Darstellung der Kulissenführung bei teilweise geöffneter Filterklappe
- Figur 7:: Seitenansicht der Industrieabsauganlage mit geöffneter Filterklappe
- Figur 8:: detaillierte Darstellung der Kulissenführung bei vollkommen geöffneter Filterklappe
- Figur 9:: perspektivische Darstellung der Industrieabsauganlage mit geöffneter Filterklappe
- Figur 10:: perspektivische Darstellung der Kulissenführung bei geöffneter Filterklappe
- Figur 11:: perspektivische Darstellung der Industrieabsauganlage mit Filterklappe und zusätzlichem Tablett
- Figur 12:: Seitenansicht der Industrieabsauganlage mit Filterklappe und zusätzlichem Tablett

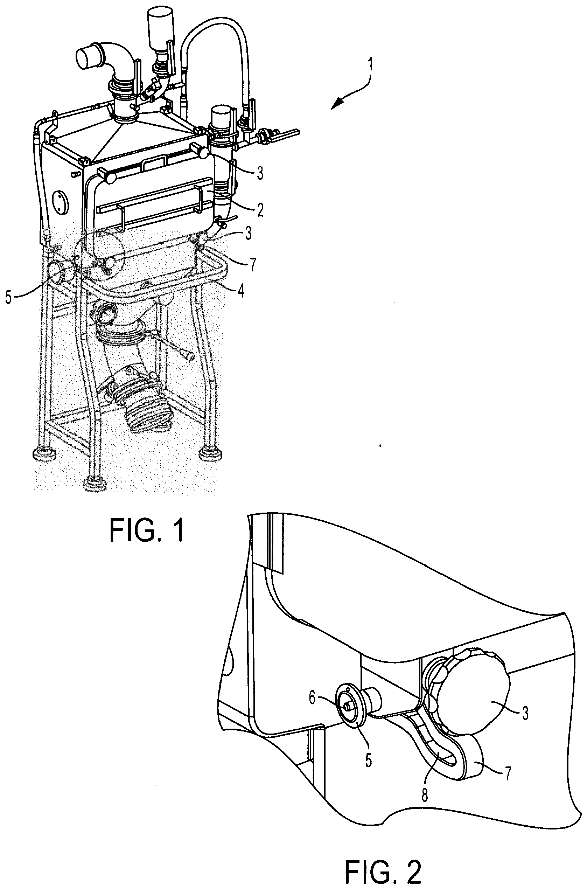

Mit der Figur 1 wird eine Industrieabsauganlage 1 gezeigt, welche ein Filtergehäuse aufweist, das über eine Filterklappe 2 verschlossen bzw. verriegelt werden kann.

Das Filtergehäuse beherbergt einen Filter 21, welcher beispielsweise als HEPA Filter 21 ausgebildet ist. Der Filter wird bevorzugt über einen Beutel entnommen (Bagln&BagOut-Verfahren). Die Filterklappe 2 wird mit den Verriegelungsmitteln 3 geöffnet und verschlossen.

Bei den Verriegelungsmitteln 3 handelt es sich beispielsweise um Rändelkopfschrauben, welche mit Gewinden 18 im Bereich der Öffnung der Filterklappe 2 der Industrieabsauganlage 1 zusammenwirken.

Ferner geht aus der Figur 1 ein Bügel 4 hervor, welcher bevorzugt unterhalb der Filterklappe 2 angeordnet ist und zur Abstützung der geöffneten Filterklappe 2 dient.

Die Filterklappe 2 ist bei der vorliegenden Ausführungsform nicht nur über die Verriegelungsmitteln 3 mit dem Gehäuse der Industrieabsauganlage 1 verbunden, sondern vielmehr auch über mindestens ein zusätzliches Füllungselement 7, welches eine profilierte Ausnehmung 8 aufweist. Die Ausnehmung 8 ist so ausgebildet, dass sie als Kulissenführung für einen Stift 13 dient.

An der Filterklappe 2 sind bevorzugt zwei, hier nicht näher darstellte Stifte 13 angeordnet, welche in die Ausnehmungen 8 der Führungselemente 7 einsteckbar sind und von dieser geführt werden.

Mit der Figur 2 wird eine detaillierte Darstellung des Führungselementes 7 und dessen profilierten Ausnehmung 8 gezeigt. Oberhalb des Führungselementes 7 befindet sich das Verriegelungselement 3, welches als Rändelschraube ausgebildet ist. Bei der vorliegenden Ausführungsform wird die Filterklappe 2 mit insgesamt 4 Verriegelungsmitteln 3 mit dem Gewinde 18 der Industrieabsauganlage 1 verbunden. Selbstverständlich können auch weniger oder mehr als vier Verriegelungsmittel 3 zur Befestigung der Filterklappe 2 eingesetzt werden.

Mit der Figur 2 wird ferner ein Betätigungsmittel 5 gezeigt, welches einen Druckknopf 6 aufweist. Durch die Betätigung des Druckknopfes 6 wird eine nicht näher dargestellte Sperrklinke betätigt, wodurch der Stift 13 freigegeben wird und somit entlang der Ausnehmung 8 des Führungselementes 7 verschiebbar ist. Die Sperrklinke kann hierbei federbelastet ausgebildet sein.

Die Sperrklinke greift im verriegelten Zustand in eine Ausnehmung der Gehäuseoberfläche 14 ein und sichert somit die Filterklappe 2 gegen ein unerwünschtes Verrutschen innerhalb der Ausnehmung 8 des Führungselementes 7.

Wird nun das Betätigungsmittel 5 in Richtung der Gehäuseoberfläche 14 verschoben, so öffnet sich kurz die Sperrklinke, um anschließend in die Ausnehmung der Gehäuseoberfläche 14 einzugreifen. Der Druckknopf 6 dient somit zur Entriegelung des Betätigungsmittels 5.

Die Neuerung ist nicht auf die Verwendung eines Druckknopfes und einer Sperrklinke beschränkt. Es ist selbstverständlich auch möglich, dass der Stift 13 frei innerhalb der Ausnehmung 8 des Führungselementes 7 verschiebbar angeordnet ist.

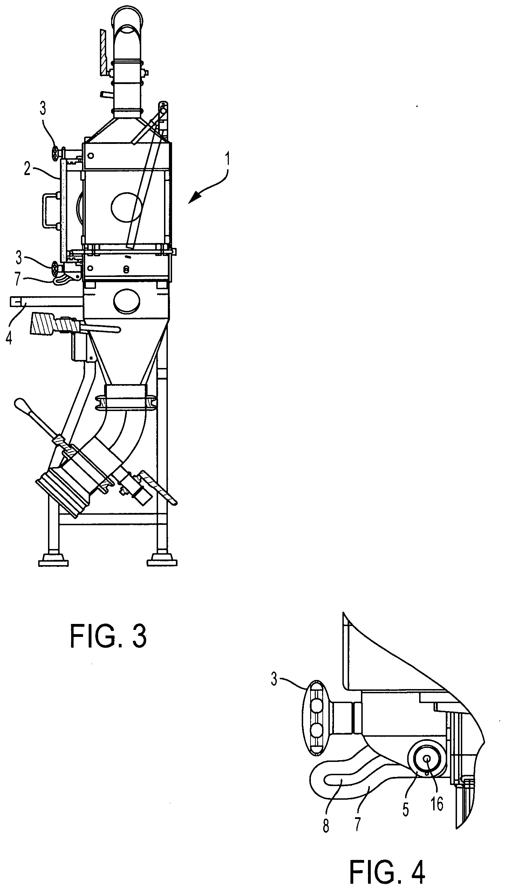

Mit der Figur 3 wird die Industrieabsauganlage 1 in der Seitenansicht dargestellt. Die Filterklappe 2 ist mit den Verriegelungsmitteln 3 verschlossen, wobei sich im unteren Bereich der Filterklappe 2 das Führungselement 7 befindet, welches ein scharnierartiges Abklappen der Filterklappe 2 gegenüber der Industrieabsauganlage 1 ermöglicht.

Unterhalb des Führungselementes 7 ist ferner der tragrahmenartige Bügel 4 angeordnet, welcher eine abstützende Funktion für die Filterklappe 2 im geöffneten Zustand hat.

Die Figur 4 zeigt eine detaillierte Darstellung des Führungselementes 7 in der Seitenansicht. Das Betätigungsmittel 5 weist einen Druckknopf 6 zum Freigegeben des Stiftes 13 auf. Mit der Betätigung des Druckknopfes 6 wird eine Kraft auf die Sperrklinke ausgeübt, wodurch die Sperrklinke aus der Ausnehmung der Gehäuseoberfläche 14 herausgeschwenkt wird und somit der Stift innerhalb der Ausnehmung 8 des Führungselementes 7 frei bewegbar ist.

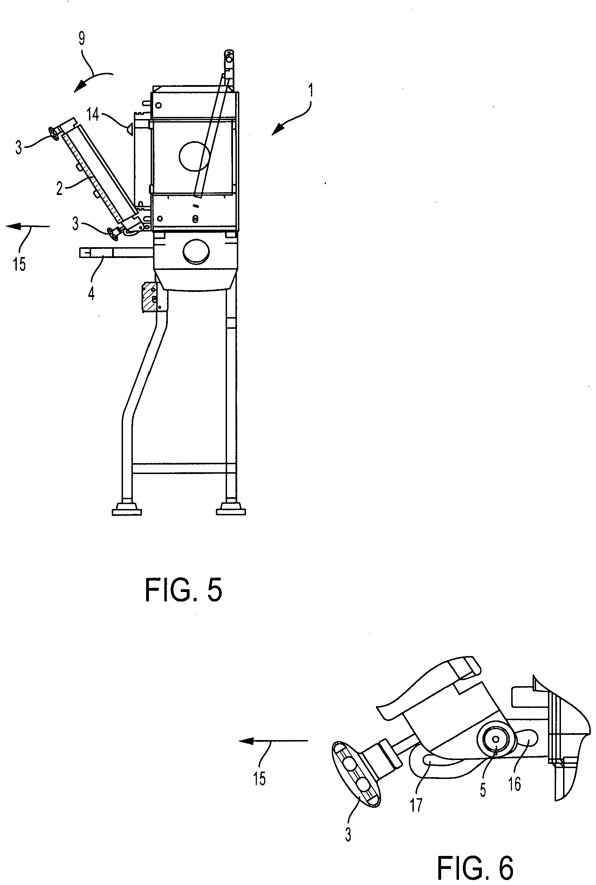

Die Figur 5 zeigt die Industrieabsauganlage 1 mit einer teilweise geöffneten Filterklappe 2. Um die Filterklappe 2 zu öffnen, müssen in einem ersten Schritt die Verriegelungsmittel 3 gelöst werden.

Im Anschluss daran kann nun die Filterklappe 2 in Fallrichtung 15 von der Gehäuseoberfläche 14 der Industrieabsauganlage 1 weggezogen werden. Es erfolgt ein geführter Ziehvorgang der Filterklappe 2 aufgrund der Stifte 13, welche in den profilierten Ausnehmung 8 der Führungselement 7 verlaufen.

Die Ausnehmungen 8 der Führungselemente 7 sind dergestalt ausgebildet, dass zuerst nur ein relativ gerades bzw. horizontales Abziehen der Filterklappe 2 in Pfeilrichtung 15 möglich ist. Dies verhindert ein Verklemmen zwischen der Innenseite der Filterklappe 2 und dem Rand des Filtergehäuses 11. Des Weiteren werden die umlaufenden Dichtungen im Randbereich 11 nicht beschädigt.

Insbesondere bei Industrieabsauganlagen 1 ist für die Filterklappe 2 ein umlaufender Rand 11 im Bereich des Filtergehäuses vorgesehen. Dadurch kann die Filterklappe 2 nur gerade auf die Gehäuseoberfläche 14 aufgesetzt werden.

Nachdem nun die Filterklappe 2 in Pfeilrichtung 15 entlang der Ausnehmung 8 des Führungselementes 7 abgezogen wurde, ist ein Klappvorgang in Pfeilrichtung 9 der gesamten Filterklappe 2 möglich. Die Ausnehmung 8 des Führungselementes 7 hat daher eine Doppelfunktion. Zum einen wird ein gezieltes Abziehen bzw. Entfernen der Filterklappe 2 von dem Rand des Filtergehäuses 11 erreicht und zum anderen kann die Filterklappe im Anschluss daran abgeklappt werden.

Gemäß der Figur 5 kann die Filterklappe 2 bis zum Aufliegen auf den Bügel 4 abgeklappt werden. Im geöffneten Zustand ist somit eine Öffnung der Filterklappe 2 gegenüber der Gehäuseoberfläche 14 mit einem Winkel von 90 Grad möglich. Die Figur 6 zeigt eine detaillierte Darstellung der Filterklappe 2 bei einer Bewegung in Pfeilrichtung 15. Ausgehend von einer Position 16 in welcher sich die Filterklappe 2 in ihrer Schließstellung befindet, wird nun das Betätigungsmittel 5 in Pfeilrichtung 15 gezogen bis eine Position 17 erreicht ist. Im Bereich der Position 17 ist nun ein ausreichender Abstand zwischen der Filterklappe 2 und der Gehäuseoberfläche 14 erreicht, so dass ein Abklappvorgang in Pfeilrichtung 9 stattfinden kann.

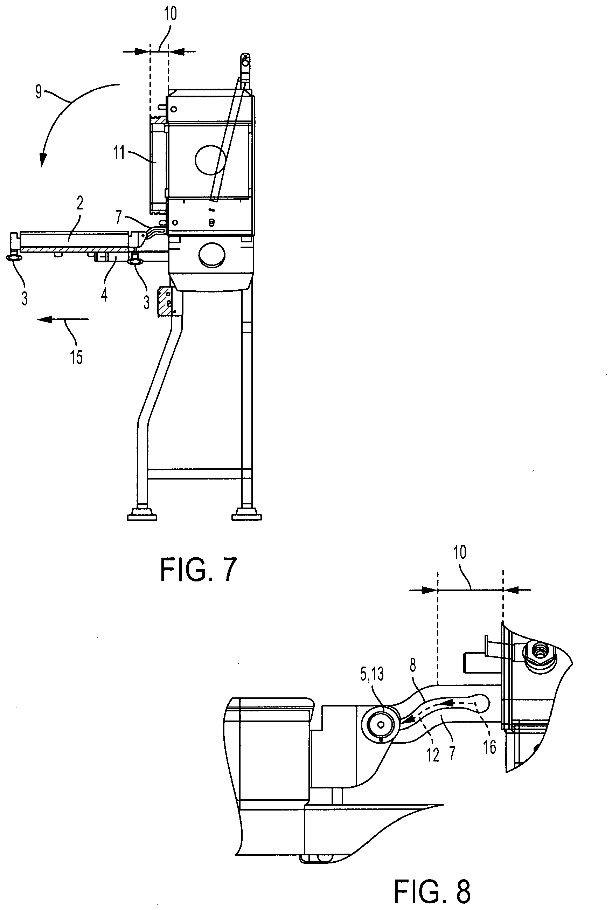

Mit den Figuren 7 und 8 wird eine vollkommen geöffnete Filterklappe 2 gezeigt. Gemäß der Figur 7 liegt die Filterklappe 2 auf dem Bügel 4 auf, welcher die Filterklappe in einem 90 Grad Winkel gegenüber der Gehäuseoberfläche14 hält.

Anhand der Figur 7 ist ferner der Rand 11 des Filtergehäuses zu erkennen, welcher einen Abstand 10 gegenüber der Gehäuseoberfläche 14 der Industrieabsauganlage aufweist. Der Abstand 10 entspricht hierbei im Wesentlichen dem geraden Streckenabschnitt des Führungselementes 7. Dies geht ferner aus der Figur 8 hervor, welche noch einmal den Verlauf 12 des Stiftes 13 der Filterklappe 2 im Bereich des Führungselementes 7 bzw. dessen Ausnehmung 8 zeigt.

Der Stift 13 ist hierbei fest an der Filterklappe 2 angeordnet und wird innerhalb der Ausnehmung 8 des Führungselementes 7 geführt. Ausgehend von der Position 16, in welcher die Filterklappe sich in ihrer Schließstelle befindet, wird nun bei einem Öffnungsvorgang der Filterklappe 2 der Stift 13 in horizontaler Richtung (Pfeilrichtung 15) mit einem Abstand 10 von der Gehäuseoberfläche 14 der Industrieabsauganlage weggezogen. Der Abstand 10 entspricht somit der Tiefe des Randes des Filtergehäuses 11.

Nach dem geraden Streckenabschnitt der Ausnehmung 8 folgt ein 45° Grad geneigter Abschnitt, welcher den Stift 13 gegenüber der Horizontalen schräg nach unten führt. Während bzw. danach kann dann die Filterklappe 2 in Pfeilrichtung 9 geklappt werden.

Die Neuerung ist nicht auf die Anordnung eines Bügels 4 beschränkt. Vielmehr können hierfür auch andere Verriegelungselemente bzw. Schieber oder dergleichen zum Feststellen der Klappe auf einem gewissen Winkel eingesetzt werden.

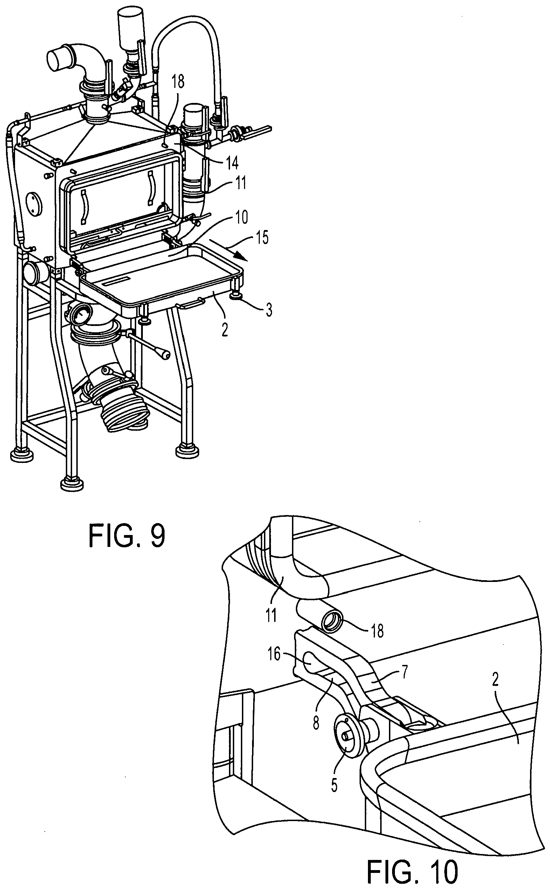

Mit den Figuren 9 und 10 wir die Industrieabsauganlage 1 mit geöffneter Filterklappe 2 gezeigt. Anhand der Figur 9 lässt sich erkennen, dass die Filterklappe 2 im Innenraum eine gewisse Tiefe aufweist, welche in etwa der Tiefe des Abstandes 10 des Randes des Filtergehäuses 11 entspricht.

Ferner lässt sich aus der Figur 9 erkennen, dass die Gehäuseoberfläche 14 insgesamt vier Gewinde 18 für die Verriegelungsmittel 3 aufweist.

Figur 10 zeigt noch einmal das Führungselement 7 mit der kulissenartigen Ausnehmung 8, wobei oberhalb des Führungselements 7 das Gewinde 18 zur Befestigung der Filterklappe 2 mit dem Verriegelungselement 3 dargestellt ist.

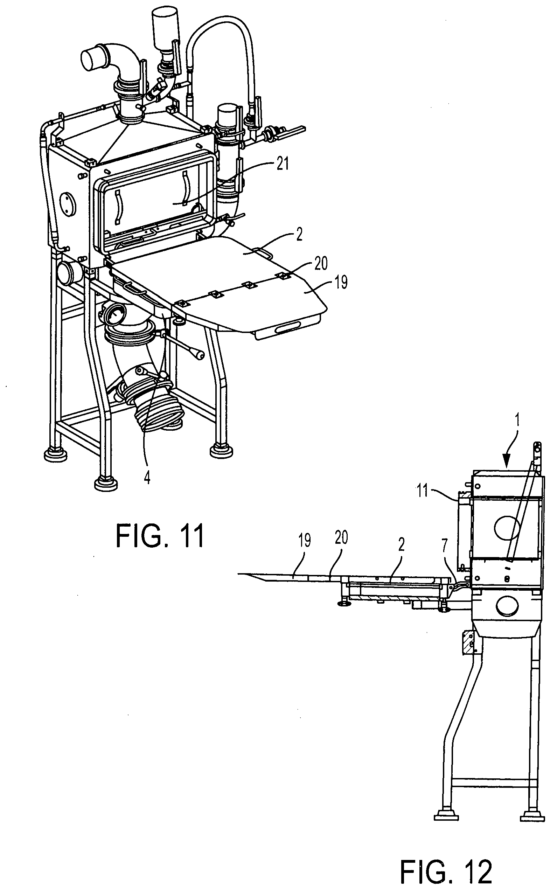

Mit den Figuren 11 und 12 wird eine weitere, bevorzugte Ausführungsform der Filterklappe 2 für eine Industrieabsauganlage 1 gezeigt. Die Filterklappe 2 weist hierbei bevorzugt im Randbereich mindestens ein Scharnier 20 auf, mit welchem eine Verlängerung 19 in Form eine Tabletts ausgeklappt werden kann. Durch die besondere Ausbildung der Verlängerung 19 als Tablett ist es nun möglich, die Filterklappe als relativ großen Arbeitstisch zu verwenden, was insbesondere bei einem Filterwechsel des Filters 21 notwendig sein kann.

Anhand der Figur 12 lässt sich ferner erkennen, dass der Arbeitsbereich der Filterklappe 2 deutlich um die Verlängerung 19 erweitert wurde.

Bei den oben beschriebenen Ausführungsformen ist stets vom Öffnungsvorgang der Filterklappe 2 die Rede. Selbstverständlich kann die neuerungsgemäße Ausführungsform auch beim Schließvorgang der Filterklappe 2 eingesetzt werden.

Durch die besonders profilierte Ausnehmung 8 ist es daher möglich die Filterklappe 2 an den Rand des Filtergehäuses 11 zu klappen und im Anschluss daran, die Filterklappe 2 gerade (entgegen der Pfeilrichtung 15) auf den Rand 11 aufzuschieben, so dass die Filterklappe 2 mit den Verriegelungsmitteln 3 an der Industrieabsauganlage 1 befestigt werden kann.

### Zeichnungslegende

- 1: Industrieabsauganlage
- 2: Filterklappe
- 3: Verriegelungsmittel
- 4: Bügel
- 5: Betätigungsmittel
- 6: Druckknopf
- 7: Führungselement
- 8: Ausnehmung
- 9: Pfeilrichtung
- 10: Abstand
- 11: Rand des Filtergehäuses
- 12: Verlauf des Stiftes (13) beim Öffnen
- 13: Stift
- 14: Gehäuseoberfläche
- 15: Pfeilrichtung
- 16: Position in Schließstellung
- 17: Position in Offenstellung
- 18: Gewinde für 3
- 19: Verlängerung
- 20: Scharnier
- 21: Filter

## Patentansprüche

1. Industrieabsauganlage (1) mit einer Filterklappe (2) zum Verschließen einer Gehäuseöffnung eines Filtergehäuses für mindestens einen Filter (21), wobei die Filterklappe (2) mit mindestens einem Verriegelungsmitteln (3) gegenüber der Gehäuseoberfläche (14) der Industrieabsauganlage (1) befestigbar ist, und das Filtergehäuse einen umlaufenden Rand (11) um die Gehäuseöffnung aufweist, auf welchen die Filterklappe (2) aufsetzbar ist und der um einem Abstand (10) horizontal von der Gehäuseoberfläche (14) des Filtergehäuses absteht, wobei die Filterklappe (2) in geöffnetem Zustand eine Ablagefläche für den Filter (21) bildet, **dadurch gekennzeichnet, dass** die Filterklappe (2) mittels einer Kulissenführung einseitig schwenkbar an der Gehäuseoberfläche (14) angeordnet ist und eine verschiebbare Schwenkachse aufweist, wobei die Kulissenführung aus mindestens einem an der Gehäuseoberfläche (14) angeordneten Führungselement (7) mit mindestens einer profilierten Ausnehmung (8) besteht, und das gegenüberliegende Teil mindestens einen Stift (13) aufweist, welcher drehend und verschiebbar in der profilierten Ausnehmung (8) gelagert ist, wobei die Länge eines horizontalen, geraden Abschnitts der profilierten Ausnehmung (8) des Führungselementes (7) in etwa dem Abstand (10) des Randes (11) entspricht.

2. Industrieabsauganlage (1) nach Anspruch 1, **dadurch gekennzeichnet, dass** die Kulissenführung die Filterklappe (2) im geöffneten Zustand in einem Winkel von etwa 90° gegenüber der Gehäuseoberfläche (14) arretiert.

3. Industrieabsauganlage (1) nach einem der Ansprüche 1 oder 2, **dadurch gekennzeichnet, dass** im Bereich der Gehäuseoberfläche (14) ein Bügel (4) angeordnet ist, welcher die Filterklappe (2) im geöffneten Zustand abstützt.

4. Industrieabsauganlage (1) nach einem der Ansprüche 1 bis 3, **dadurch gekennzeichnet, dass** mithilfe der Filterklappe (2) mindestens ein Filter (21) nach dem BagIn&BagOut-Verfahren auswechselbar ist.

5. Industrieabsauganlage (1) nach einem der Ansprüche 1 bis 4, **dadurch gekennzeichnet, dass** die Filterklappe (2) im Bereich der Schwenkachse mindestens ein Betätigungsmittel (5) aufweist, welches mit einer Sperrklinke zusammenwirkt, die in mindestens eine Ausnehmung in der Gehäuseoberfläche (14) eingreift und ein weiteres Verschieben des Stiftes (13) verhindert.

6. Industrieabsauganlage (1) nach einem der Ansprüche 1 bis 5, **dadurch gekennzeichnet, dass** die Filterklappe (2) mindestens ein randseitiges Scharnier (20) aufweist, mit welchem eine Verlängerung (19) der Filterklappe (2) in Form eines Tabletts ausklappbar ist.

7. Industrieabsauganlage (1) nach einem der Ansprüche 1 bis 6, **dadurch gekennzeichnet, dass** die Kulissenführung unterhalb des Filtergehäuserand (11) angeordnet ist.

8. Industrieabsauganlage (1) nach einem der Ansprüche 1 bis 7, **dadurch gekennzeichnet, dass** zur Entfernung der Filterklappe (29) von der Industrieabsauganlage (1) die Kulissenführung vertikal schwenkbar ausgebildet ist.

## Claims

1. Industrial extraction installation (1) having a filter door (2) for closing a housing opening of a filter housing for at least one filter (21), wherein the filter door (2) having at least one locking means (3) is attachable with respect to the housing surface (14) of the industrial extraction installation (1), and the filter housing has an annular edge (11) around the housing opening, on which the filter door (2) is placeable and which projects by a distance (10) horizontally from the housing surface (14) of the filter housing, wherein the filter door (2) in the opened state forms a support surface for the filter (21), **characterised in that** the filter door (2) is arranged to be pivotable on the housing surface (14) on one side by means of a slotted guide and has a displaceable pivot axis, wherein the slotted guide consists of at least one guide element (7) arranged on the housing surface (14) and having at least one profiled recess (8), and the opposite part has at least one pin (13) which is mounted to be rotatable and displaceable in the profiled recess (8), wherein the length of a horizontal, straight section of the profiled recess (8) of the guide element (7) corresponds approximately to the distance (10) of the edge (11).

2. Industrial extraction installation (1) according to claim 1, **characterised in that** the slotted guide locks the filter door (2) in the opened state at an angle of about 90° with respect to the housing surface (14).

3. Industrial extraction installation (1) according to one of claims 1 or 2, **characterised in that** a frame (4), which supports the filter door (2) in the opened state, is arranged in the region of the housing surface (14).

4. Industrial extraction installation (1) according to one of claims 1 to 3, **characterised in that** at least one filter (21) is replaceable by the bag-in & bag-out method, with the aid of the filter door (2).

5. Industrial extraction installation (1) according to one of claims 1 to 4, **characterised in that** the filter door (2) in the region of the pivot axis has at least one actuating means (5) which cooperates with a catch which engages in at least one recess in the housing surface (14) and prevents further displacement of the pin (13).

6. Industrial extraction system (1) according to one of claims 1 to 5, **characterised in that** the filter door (2) has at least one edge-side hinge (20), with which an extension (19) of the filter door (2) in the form of a tray is unfoldable.

7. Industrial extraction installation (1) according to one of claims 1 to 6, **characterised in that** the slotted guide is arranged below the filter housing edge (11).

8. Industrial extraction installation (1) according to one of claims 1 to 7, **characterised in that** to remove the filter door (29) from the industrial extraction system (1), the slotted guide is designed to be vertically pivotable.

## Revendications

1. Installation d'aspiration industrielle (1) avec un volet de filtre (2) pour obturer une ouverture de carter d'un carter de filtre pour au moins un filtre (21), dans laquelle le volet de filtre (2) est apte à être fixée par rapport à la surface de carter (14) de l'installation d'aspiration industrielle (1) avec au moins un moyen de verrouillage (3), et le carter de filtre présente un bord périphérique (11) autour de l'ouverture de carter, sur lequel le volet de filtre (2) peut être posé et qui dépasse horizontalement de la surface de carter (14) du carter de filtre d'une distance (10), dans laquelle le volet de filtre (2), à l'état ouvert, forme une surface d'appui pour le filtre (21), **caractérisée en ce que** le volet de filtre (2) est disposé pivotant d'un côté sur la surface de carter (4) à l'aide d'un guide à coulisse et présente un axe de pivotement coulissant, dans laquelle le guide à coulisse se compose d'au moins un élément de guidage (7) disposé sur la surface de carter (4), et d'au moins un creux profilé (8), et la partie opposée présente au moins une tige (13), laquelle partie est montée en rotation et coulissante dans le creux profilé (8), dans laquelle la longueur d'une section rectiligne horizontale du creux profilé (8) de l'élément de guidage (7) correspond à peu près à la distance (10) du bord (11).

2. Installation d'aspiration industrielle (1) selon la revendication 1, **caractérisée en ce que** le guidage à coulisse arrête le volet de filtre (2), à l'état ouvert, à un angle d'environ 90° par rapport à la surface de carter (14).

3. Installation d'aspiration industrielle (1) selon l'une des revendications 1 ou 2, **caractérisée en ce que** dans la zone de la surface de carter (14) est disposé un étrier (4) qui supporte le volet de filtre (2) à l'état ouvert.

4. Installation d'aspiration industrielle (1) selon l'une des revendications 1 à 3, **caractérisée en ce qu'**à l'aide du volet de filtre (2), au moins un filtre (21) peut être changé selon le procédé bag-in bag-out.

5. Installation d'aspiration industrielle (1) selon l'une des revendications 1 à 4, **caractérisée en ce que** le volet de filtre (2), dans la zone de l'axe de pivotement, présente au moins un moyen d'actionnement (5) qui coopère avec un cran d'arrêt qui vient en prise dans au moins un creux de la surface de carter (14) et empêche la tige (13) de coulisser davantage.

6. Installation d'aspiration industrielle (1) selon l'une des revendications 1 à 5, **caractérisée en ce que** le volet de filtre (2) présente au moins une charnière côté bord (20) avec laquelle un prolongement (19) du volet de filtre (2) est apte à être déployé sous la forme d'une tablette.

7. Installation d'aspiration industrielle (1) selon l'une des revendications 1 à 6, **caractérisée en ce que** le guide à coulisse est disposé au-dessous du bord de carter de filtre (11).

8. Installation d'aspiration industrielle (1) selon l'une des revendications 1 à 7, **caractérisée en ce que** pour enlever le volet de filtre (29) de l'installation d'aspiration industrielle (1), le guide à coulisse est formé pour pouvoir pivoter verticalement.
